# EUROPEAN PATENT APPLICATION

(11) **EP 1 464 481 A1**
(43) Date of publication of application: **06.10.2004**
(21) Application number: 04075983.9
(22) Date of filing: 31.03.2004
(51) Int. Cl.: B32B 27/08, B32B 27/32, B32B 27/36

(54) **Material for packaging purposes**

(30) Priority: 04.04.2003 SE 0301023
(71) Applicant: Amcor Flexibles Europe A/S, 8700 Horsens (DK)
(72) Inventor: Nideborn, Karl, 227 31 Lund (SE); Lenkler-Sunesson, Birgit, 237 33 Bjärred (SE)
(74) Representative: Romare, Laila Anette

(57) **Abstract**

The present invention relates to a material for packaging purposes, comprising a first layer of a thermoplastic polymer and a second layer, wherein said second layer is a thin barrier deposition layer and said first layer carries said second layer, wherein said second layer has a primer applied onto the side which is distant to said first layer, and that said primer comprises a first component which gives an adequate bonding to a deposition layer, polar polymers and oxidized unpolar polymers, and a method for preparing a material and a method for packaging, and a package.

## Description

### TECHNICAL FIELD

The present invention relates to a material for packaging purposes, comprising a first layer of a thermoplastic polymer and a second layer, wherein said second layer is a thin barrier deposition layer and said first layer carries said second layer, and a method for preparing a material and a method for packaging, and a package.

### BACKGROUND ART

Conventional non-(aluminium foil) containing materials comprising a thin barrier deposition layer have a limited barrier and flexcrack resistance. The thin barrier deposition layer may, for example, be of metallized aluminium. In these materials aluminium metallized film may be achieved through a vacuum deposition process. An example of such material is a material consisting of oriented polyethylene terephthalate with metallized aluminium (OPET met. Al) and polyethylene (PE) on said metallized aluminium, i.e. (OPET met. Al) / (PE). After any passage through a packaging line and/or after physical transportation such conventional materials exhibit deteriorations in the oxygen and the water vapour barriers, which limits the uses of such materiais.

Further, conventional three-layers materials comprising an intermediate aluminium foil usually have a limited flexcrack resistance which still gives a good oxygen barrier (OTR). In this case a good OTR should be less than 0.1 cm³ /[m² day atm] at 23° C, 50% relative humidity on a flat film. In comparison with materials comprising a thin barrier deposition layer, the materials comprising an aluminium foil do weigh more and are more expensive to produce. Moreover, materials comprising a thin barrier deposition layer are consuming less energy in comparison to conventional three-layers materials comprising an intermediate aluminium foil.

Thus, there is a need for materials comprising a thin barrier deposition layer, which materials can withstand passages through a packaging line and physical transportation, and still exhibits a good gas and aroma barrier.

Furthermore, there is also a need for lighter and less expensive materials having a good flexcrack resistance and exhibiting a good gas and aroma barrier.

### DISCLOSURE OF INVENTION

The present invention relates to a material for packaging purposes, comprising a first layer of a thermoplastic polymer and a second layer, wherein said second layer is a thin barrier deposition layer and said first layer carries said second layer, wherein said second layer has a primer applied onto the side which is distant to said first layer, and said primer comprises a first component which gives an adequate bonding to a deposition layer, polar polymers and oxidized unpolar polymers.

The material according to the present invention, may, suitable, comprise further components, for example, print /s, lacquer/s, adhesives layer/s, layer/s of polymers (e.g. PE, OPET, OPA or OPP), layer/s of polar polymers, and/or layer/s of oxidized unpolar polymers.

The material for packaging purposes is especially suitable for packaging of dry food or beverages (e.g. coffee). Typical material for packaging of dry food should be able to maintain a high quality of the dry food for at least 12 months, and in some cases for at least 24 months. To achieve this it is important that the material which is used for the packaging has a satisfactory gas and aroma barrier, particularly, is a good oxygen barrier (OTR) important, thus limiting oxidation of the food. Further, it is often necessary that materials for packaging of dry food also have good water vapour barrier.

The barriers, i.e. gas, aroma and oxygen barrier (OTR), should be maintained over time, i.e. for at least 12 or 24 months, to maintain the high quality of the dry food. Conventional materials comprising metallized films, which materials are used for oxygen sensitive foods will give a, so called, shelflife of 12 months. However, changes in flavour will often occur before 12 months due to oxidation.

The first layer of a thermoplastic polymer comprises, for example, oriented polyethylene terephthalate (OPET), oriented polypropylene (OPP), oriented polyamide (OPA), cast polyamide (CPA) or cast polypropylene (CPP).

The second layer, being a thin barrier deposition layer, may be, for example, a vacuum deposition layer or a hydrocarbon based plasma deposition layer. The vacuum deposition layer may be, e.g., a vacuum deposited aluminium, SiOₓ or AlOₓ, e.g. Camclear ™, layer, and the hydrocarbon based plasma deposition layer may be, e.g., HyCarb ™.

The hydrocarbon based plasma deposition layer, SiOₓ layer and AlOₓ layer may, for example, be transparent deposition layers.

The first layer of a thermoplastic polymer may be provided from a manufacturer already carrying the second layer being a thin barrier deposition layer, or the second layer may be applied onto the first layer by means of any suitable conventional method. An example of a first layer of a thermoplastic polymer already carrying the second layer, which is provided from a manufacturer, is a first layer of an oriented polyethylene terephthalate (OPET) carrying a vacuum deposited aluminium layer. This first layer carrying said second layer has an oxygen barrier (OTR) which is normally 0.5-1.0 cm³ /[m² day atm] at 23° C, 50% relative humidity on a flat film

The primer is applied onto said second layer on the side which is distant to said first layer, and may be any suitable primer comprising said first component. Said first component results in that said primer gives an adequate bonding to a deposition layer, polar polymers and oxidized unpolar polymers. Said primer gives an adequate bonding to, for example, PE, PP, and copolymers of these polymers, and as well as, to, e.g., adhesives, lacquers and printing inks.

The wording that "the primer is applied onto said second layer" also includes embodiments wherein an intermediate adhesive or coextruded polymer layer is applied in between said second layer and the primer In this respect, the invention also includes embodiments wherein the primer is applied indirectly onto said second layer.

The intermediate adhesive layer is, for example, of any suitable conventional adhesive, e.g. of the polyester, the polyurethane or the polyether type, or combinations thereof. Said adhesive layer may have a thickness of from 0.3, 0.4, 0.5, 0.7 or 0.9 to 3.0, 4.0 or 5.0 µm, from 0.9 to 1.1 µm, or from 3.0 to 4.0 µm.

Further, an adhesive or coextruded polymer layer may also be applied (here 'applied' has the meaning of 'positoned') onto the other side of the primer, i.e. the side of the primer which is distant to said second layer.

The first component, which gives an adequate bonding to a deposition layer, polar polymers and oxidized unpolar polymers, may be, for example, an organic polyimine which has the basic chain structure of a polyethyleneimine, i.e. having repeating units of -CCN- , either substituted or unsubstituted, connected end-to-end to form the chain. The useful organic polyimine are described herein as polyalkyleneimines in view of the repeating alkylene chain units interconnected by nitrogen. Polyethyleneimine is one of a family of polyalkyleneimines, including substituted polyalkyleneimines, which are usable according to the invention. Moreover, the polyalkyleneimines may be heat sensitivized by a step of a heat sensitivizing, e.g. a temperature shock or a drying step, in, e.g. an oven or a heat nip, in the production of said material.

The polyalkyleneimines are believed to be a compound as defined in formula (1 ): 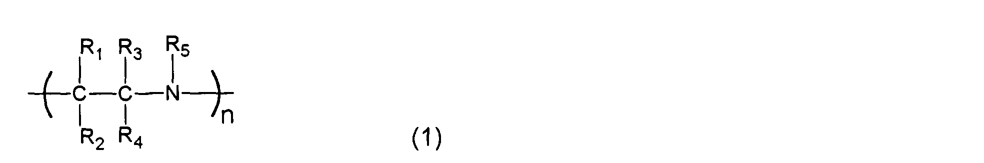 wherein R₁ through R₄ are each, independently from each other, hydrogen or an alkyl having from 1 to 6 carbon atoms, R₅ is hydrogen, an (C₁₋₆)alkyl which alkyl may be hydroxysubstituted, an (C₁₋₆)alkyl (C₁₋₆)alkoxy group, or a fatty acid residue from the reaction of a fatty acid with the imine and n is an integer.

Examples of the polyalkyleneimines according to formula (1) include polyethyleneimines, polypropyleneimines, polybuteneimines, polyisobuteneimines, poly N-methylethyleneimines, poly N-(beta-hydroxyethyl)ethyleneimines, poly N-(fatty acid)ethyleneimines, poly N-(ethylene oxide) ethyleneimines, and co-polymers thereof. The term "fatty acid" denotes a group derived from a fatty acid, e.g. C₈ to C₂₂ open chain carboxylic acid, which is reacted with the nitrogen of the polyethyleneimine to replace the free hydrogen.

Further, the polyalkyleneimines according to formula (1) also include quaternary ammonium compounds and salts, e.g., quaternary chlorides, sulphates, nitrates, acetates, or other suitable salts. Further, the molecular weight of the polyalkyleneimines according to formula (1) may vary over a wide range, e.g., from about 800 or 2000 to about 60000 or 100000.

A suitable primer which comprises a first component which gives an adequate bonding to a deposition layer, polar polymers and oxidized unpolar polymers, may, for example, be a chemically modified PEl based system.

A polyalkyleneimine according to formula (1) is polyethyleneimine ("PEl"). PEl is commercially available and may be applied as a 0.1%- 6% by weight PEI solution in water or organic solvent, e.g., poly(vinyl alcohol) ("PVOH"). A PEl such as BASF Polymin P, a PEl product with a viscosity of 17000 to 28000 centipoise and a molecular weight of about 30000-40000. PEl may be used as is, or may be chemically modified (as by crosslinking) with epoxy, melamine or aldehyde. Moreover, in an embodiment the PEl is heat sensitivized in the production of said material.

Further, the first component may also be an organofunctional silane, e.g., N-beta-(aminoethyl)-gamma-aminopropyltrimethoxysilane, a chemically modified (e.g., crosslinked) organofunctional silane, an organofunctional titanate such as an acetylacetonate chelate marketed as Tyzor GBA by DuPont, a chemically modified (e.g., crosslinked) organofunctional titanate, or any suitable mixture thereof. The use of PEl as a primer or adhesive for polymeric coatings to films substrates is well known to the art, as disclosed in US, A, 3230135. Epoxy polymers and polyurethanes may also be also useful as the first component in said primer, such primer compositions are disclosed in US, A, 4447494, US, A, 4681803 and US, A, 3023125.

Said first component gives an adequate bonding to a deposition layer, polar polymers and oxidized unpolar polymers. Thus, the use of said first component in said primer results in a material according to the invention exhibiting a high adhesive bond. Furthermore, the use of said first component in said primer according to the present invention, surprisingly, results in a material exhibiting very good gas and aroma barriers after flexcrack in comparison to other materials in the art comprising a thin barrier deposition layer. Consequently, the material according to the present invention have gas (e.g. oxygen and/or water vapour) and aroma barriers which remain on very good levels after passage through a packaging line and physical transportation.

An embodiment according to the present invention relates to a material, as described herein, wherein an adhesive or a coextruded polymer layer is applied on one or both sides of said primer. Thus, according to this embodiment materials are included which comprise an intermediate adhesive or coextruded polymer layer between said second layer and the primer Also In accordance with this embodiment, materials are included which comprise an adhesive or coextruded polymer layer which is applied onto the other side of the primer, i.e. the side of the primer which is distant to said second layer

In a further embodiment according to the present invention a material, as described herein, is disclosed, wherein said first component is an organic polyimine, an organofunctional silane, an organofunctional titanate, an epoxy polymer and polyurethane or mixtures thereof, and said polyimine, said silane, said titanate, said epoxy polymer and/or said polyurethane may, optionally, be chemically modified.

Further, the concentration of said first component may be from about 0.1 % to about 5 or 6% by weight, or from about 2 to about 5 %.

In a further embodiment according to the present invention a material, as described herein, is disclosed, wherein said first component is a compound as defined in formula (1): 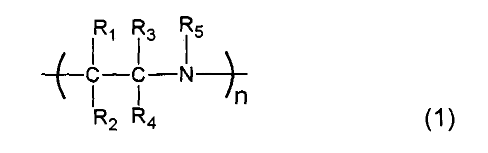
wherein R₁ through R₄ are each, independently from each other, hydrogen or an alkyl having from 1 to 6 carbon atoms,
R₅ is hydrogen, an (C₁₋₆)alkyl which alkyl may, optionally, be hydroxysubstituted, a (C₁₋₆)alkyl (C₁₋₆)alkoxy group, or a fatty acid residue from the reaction of a fatty acid with the imine,
and n is an integer, and
quaternary ammonium compounds or salts, thereof.

In an even further embodiment according to the present invention a material, as described herein, is disclosed, wherein said first component is polyethyleneimine ("PEI").

In a another embodiment according to the present invention a material, as described herein, is disclosed, wherein said first component has the ability to be heat sensitivized.

Furthermore, the primer may be any suitable primer comprising said first component and said second component.

According to a further embodiment of the present invention a material, as described herein, is disclosed, wherein the primer comprises a second component which gives a gas and aroma barrier.

The use of said second component together with the first component in the primer results in a material comprising a thin barrier deposition layer, which material exhibits very good gas and aroma barriers after flexcrack in comparison to other materials in the art comprising a thin barrier deposition layer. Consequently, the material according to this embodiment of the present invention have improved gas (e.g. oxygen) and aroma barriers, which barriers remain on very good levels after passage through a packaging line and physical transportation.

The second component may, for example, be poly(vinyl alcohol) ["PVOH"], a copolymer of ethylene and vinyl alcohol ["EVOH"], polyvinylidene chloride ["PVDC"], or an acrylonitrile.

Further, the concentration of said second component may be from about 1, 3, 5, 7 or 9 to about 10, 11 or 12 % (weight), or from about 7 or 9 to about 10 or 12 % (weight).

Further, when said second component is PVOH, said primer may, in addition to said first component, comprise up to about 10-12 % (weight) of a PVOH resin.

Poly(vinyl alcohol) ["PVOH"] is typically produced by hydrolyzing poly(vinyl acetate). Specifically, the hydrolysis reaction replaces the acetate groups with alcohol groups. The more acetate groups that are replaced, the greater the hydrolysis of the PVOH. It is believed that the presence of more alcohol groups (i.e., greater hydrolysis) provides better barrier properties. However, even after hydrolysis of the PVOH, a certain number of acetate groups remain attached to the PVOH molecule. For example, in a 95% hydrolyzed PVOH approximately 5% of the originally present acetate groups remain attached to the molecule, whereas in a 99% hydrolyzed PVOH approximately 1 % of the originally present acetate groups remain attached to the molecule. PVOH may be produced with various viscosities and various degrees of hydrolysis. Viscosity is typically a function of the molecular weight of the PVOH molecule. Specifically, a solution of PVOH in which the individual molecules are relatively large (i.e., a high molecular weight PVOH) tends to have a higher viscosity than a solution of PVOH in which the individual molecules are relatively small (i.e., a low molecular weight PVOH).

It is believed Van der Waals forces develop between the larger-sized molecules because such molecules tend to align themselves with one another, thus increasing the viscosity of the PVOH.

A PVOH such as Elvanol 71-30 (produced by DuPont) is typically referred to as a medium viscosity, fully hydrolyzed PVOH. Specifically, the degree of hydrolysis of a fully hydrolyzed PVOH is about 98%. Further, the viscosity of a medium viscosity grade PVOH such as Elvanol 71-30 is about 30 cps at 4% solution and 20° C. Another commercially available PVOH is Elvanol 75-15 (also produced by DuPont), which is a low viscosity, fully hydrolyzed PVOH. Specifically, the degree of hydrolys is about 98% and the viscosity is about 13 cps at 4% solution and 20°C.

Still another commonly available PVOH is Elvanol 90-50 (also produced by DuPont), which is a low viscosity super hydrolyzed PVOH. The degree of hydrolysis in a super hydrolyzed PVOH is about 99.5% The viscosity of a low viscosity grade PVOH such as Elvanol 90-50 is about 13 cps at 4% solution and 20°C. Another commercial source of extrudable PVOH is Vinex resin manufactured by Air Products and Chemicals, Inc.

Further, when said second component is EVOH, said primer may, in addition to said first component, comprise up to about 10-12 % (weight) of an EVOH resin, which EVOH resin is, if necessary, dissolved in a carrier comprising, e.g., n-propanol or secondary butanol, a C₂ to C₈ carboxylic acid, a mineral acid or a polymeric acid, and water, wherein the proportions of each of the ingredients, or any other suitable carrier, may suitably be chosen by a person skilled in the art.

The EVOH resin may desirably contain from about 12 to 48 mol percent ethylene copolymerized with correspondingly, from about 88 to 52 mol percent vinyl alcohol. The melt index of these EVOH resins is generally about 0.6 to 16 decigrams per minute at 200° C.

In an embodiment according to the present invention a material, as described herein, is disclosed, wherein said second component is poly(vinyl alcohol) ["PVOH"] or a copolymer of ethylene and vinyl alcohol ["EVOH"].

In a further embodiment a material according to the present invention is disclosed, wherein said second component is poly(vinyl alcohol) ["PVOH"]. In this case a good oxygen barrier (OTR) should be less than 0.1 cm³ /[m² day atm] at 23° C, 50% relative humidity on a flat film. Furthermore, the use of said first component in said primer according to the present invention, results in a material having good flexcrack resistance, although the material comprises a thin barrier deposition layer. Consequently, the material, wherein said second component is PVOH, has gas and aroma barriers, including OTR, which still are on a very low level after passage through a packaging line and physical transportation.

In another embodiment of the present invention a material, as described herein, is disclosed, wherein the primer comprises polyethyleneimine ("PEI") as said first component and poly(vinyl alcohol) ["PVOH"] as said second component.

According to another embodiment of the present invention a material, as described herein, is disclosed, wherein said primer is crosslinked internally and/or externally crosslinked. Thus, said first component (e.g. PEl) and said second component (e.g. PVOH) when present, can be crosslinked internally and/or to each other. Crosslinking of said primer may be achieved by using a crosslinking agent.

Further, the crosslinking agent may comprise any suitable crosslinking agents known in the art, including epoxy resins, alkyd resins and/or condensation products of an amine, e.g. melamine, diazine, urea, thiourea, alkyl melamines, aryl melamines, benzo guanamines, guanamines, alkyl guanamines and aryl guanamines with an aldehyde, e.g. formaldehyde. The condensation products may optionally be alkoxylated.

Furthermore, a suitable crosslinking agent may also comprise at least one member selected from the group consisting of a metal alcoholate represented by general formula (2), a hydrolysate of the metal alcoholate, a condensate of the metal alcoholate, a chelate compound of the metal alcoholate, a hydrolysate of the chelate compound and a metal acylate:
compound according formula (2)

R¹⁰ ₘM(OR²⁰)ₚ (2)

wherein M represents a metal atom, R¹⁰, which may be either identical to or different from each other, represents an organic group having 1 to 8 carbon atoms, R²⁰, which may be either identical to or different from each other, represents an alkyl group having 1 to 5 carbon atoms, an acyl group having 1 to 6 carbon atom or a phenyl group, and m and p are each integers of 0 or more and m+p is a valence of M.

Further, other suitable proprietary commercially available crosslinking agents are also included.

A catalyst may also be used to accelerate the crosslinking action of the crosslinking agent, and catalysts include ammonium chloride, ammonium nitrate, ammonium thiocyanate, ammonium dihydrogen phosphate, diammonium hydrogen phosphate, para toluene sulphonic acid, sulphuric acid, maleic acid stabilised by reaction wtih a base, and morpholinum para toluene sulphonate.

By crosslinking of said primer it has been possible to provide a material, as described herein, which has the ability to withstand the conditions under retort. The crosslinking of said primer gives a material wherein the stability, as well as the barrier, to steam and water are improved.

In a further embodiment of the present invention a material is disclosed, wherein the first layer comprises oriented polyethylene terephthalate (OPET), oriented polypropylene (OPP), oriented polyamide (OPA), cast polyamide (CPA) or cast polypropylene (CPP). However, it should be noted that when the first layer comprises an OPP the oxygen barrier (OTR) of the material will not be less than 0.1. Thus, a further embodiment of the present invention discloses a material, wherein the first layer comprises oriented polyethylene terephthalate (OPET) or oriented polyamide (OPA).

According to an even further embodiment of the present invention a material is disclosed, wherein the thin barrier deposition layer is a vacuum deposition layer, e.g., a vacuum deposited aluminium, SiOₓ or AlOₓ layer, or a hydrocarbon based plasma deposition layer.

In a further embodiment the present invention relates to a material, wherein said second layer has a primer applied directly onto the side which is distant to said first layer.

In still a further embodiment the present invention relates to a material, wherein said second layer has an adhesive or a coextruded polymer layer applied directly onto the side which is distant to said first layer, and said primer applied thereon.

According to a further embodiment of the present invention a material is disclosed comprising further component/s, for example, print /s, lacquer/s, adhesives layer/s, layer/s of polymers (e.g. PE, OPET, OPA or OPP), layer/s of polar polymers, and/or layer/s of oxidized unpolar polymers.

Some of said further components may, when suitable, be applied directly onto the primer. Said further components may also be applied onto said first layer of a thermoplastic polymer or to others of said further components.

Said further components include, for example, layer/s comprising a layer of an adhesive and a layer of PE.

Examples of materials according to the present invention may be materials comprising in the following order:
The first layer of thermoplastic polymer being OPET, OPP, OPA, CPA or CPP,
the second layer, being a thin barrier deposition layer, is a vacuum deposited aluminium, SiOₓ or AIO_{X} , or a hydrocarbon based plasma deposition layer, the primer wherein the first component is an organic polyimine, an organofunctional silane, an organofunctional titanate, an epoxy polymer and polyurethane or mixtures thereof, and the second component is a "PVOH", an "EVOH" or a "PVDC", and
   a print or lacquer.
The first layer of thermoplastic polymer being OPET, OPP, OPA, CPA or CPP,
the second layer, being a thin barrier deposition layer, is a vacuum deposited aluminium, SiOₓ or AtOₓ , or a hydrocarbon based plasma deposition layer,
the primer wherein the first component is an organic polyimine, an organofunctional silane, an organofunctional titanate, an epoxy polymer and polyurethane or mixtures thereof, and the second component is a "PVOH", an "EVOH", "PVDC", or an acrylonitrile
a layer comprising a layer of an adhesive and a layer of PE, and
a layer of paper, OPET, OPA or OPP.
The first layer of thermoplastic polymer being OPET, OFF, OPA, CPA or CPP,
the second layer, being a thin barrier deposition layer, is a vacuum deposited aluminium, SiOₓ or AlOₓ , or a hydrocarbon based plasma deposition layer,
an adhesive or a coextruded polymer layer,
the primer wherein the first component is an organic polyimine, an organofunctional silane, an organofunctional titanate, an epoxy polymer and polyurethane or mixtures thereof, and the second component is a "PVOH", an "EVOH" or a "PVDC", and
a print or lacquer.
The first layer of thermoplastic polymer being OPET, OPP, OPA, CPA or CPP,
the second layer, being a thin barrier deposition layer, is a vacuum deposited aluminium, SiOₓ or AlOₓ, or a hydrocarbon based plasma deposition layer,
an adhesive or a coextruded polymer layer,
the primer wherein the first component is an organic polyimine, an organofunctional silane, an organofunctional titanate, an epoxy polymer and polyurethane or mixtures thereof, and the second component is a "PVOH", an "EVOH" or a "PVDC",
a layer comprising a layer of an adhesive and a layer of PE, and
a layer of paper, OPET, OPA or OPP.
The first layer of thermoplastic polymer being OPET, OPP, OPA, CPA or CPP,
the second layer, being a thin barrier deposition layer, is a vacuum deposited aluminium, SiOₓ or AlOₓ , or a hydrocarbon based plasma deposition layer the primer wherein the first component is an organic polyimine, an organofunctional silane, an organofunctional titanate, an epoxy polymer and polyurethane or mixtures thereof, and the second component is a "PVOH", an "EVOH" or a "PVDC",
a layer comprising a layer of an adhesive and a layer of PE, and
a layer of a polar or oxidized unpolar polymer.
A layer of paper, OPET, OPA or OPP,
a layer comprising a layer of an adhesive and a layer of PE,
the first layer of thermoplastic polymer being OPET, OPP, OPA, CPA or CPP,
the second layer, being a thin barrier deposition layer, is a vacuum deposited aluminium, SiOₓ or AlOₓ , or a hydrocarbon based plasma deposition layer
the primer wherein the first component is an organic polyimine, an organofunctional silane, an organofunctional titanate, an epoxy polymer and polyurethane or mixtures thereof, and the second component is a "PVOH", an "EVOH" or a "PVDC",
a further layer comprising a layer of an adhesive and a layer of PE, and
a layer of a polar or oxidized unpolar polymer.

The invention also relates to a method for preparing a material as described herein, wherein the material may be prepared by suitable conventional means, e.g. lacquer lamination, extrusion coating or lamination, or, alternatively, in a printing press. The method for preparing comprises application of a primer onto a thin barrier deposition layer, an adhesive layer or a coextruded polymer layer, wherein the primer comprises a first component which gives an adequate bonding to a deposition layer, an adhesive layer, a coextruded polymer layer, polar polymers, oxidized unpolar polymers and to any said further component/s.

In a further embodiment of the present invention said method for preparing a material, as described herein, comprises a step of a heat sensitivizing, e.g. a temperature shock or a drying step, and said first component, which has the ability to be heat sensitivized, is thereby heat sensitivized.

Furthermore, the invention also relates to a method for packaging, which method for packaging comprises said material, as described herein, or said method for preparing a material, also as described herein.

Moreover, in comparison with conventional three-layers materials comprising an intermediate aluminium foil, all the materials according to the embodiments of the present invention do weigh less and is less expensive to produce. Furthermore, all the materials according to present invention are consuming less energy in comparison to conventional three-layers materials comprising an intermediate aluminium foil.

Furthermore, in comparison with conventional materials comprising a thin barrier deposition layer, the material according to the present invention, when used for packaging purposes, provides for a prolonged shelflife and better tenability of packed product. For example, in any process where a material is under strain, the material according to the present invention provides for a drastically improvement of the gas, e.g., oxygen, and aroma barriers, when compared with materials having only a deposition layer. An example is passages over shoulders in vertical form fill seal (VFFS) machines. Especially, in packaging of dry food, the use of these materials will lead to an essential increase in food quality over time. The material according to the present invention provides for materials, in both planar and flexed condition, having an oxygen barrier (OTR) which is 10 times better in comparison with the oxygen barrier (OTR) of materials having a thin barrier deposition layer but without said primer.

The embodiments described in the Examples are only illustrating, and by no means limiting, the invention.

### MODES FOR CARRYING OUT THE INVENTION

### Example 1

### Preparation of a material for packaging purposes, comprising a first layer of OPET and a second layer being a vacuum deposited aluminium layer, which is carried by the layer of OPET, and said second layer has a primer applied onto the side which is distant to said first layer

The first layer of a thermoplastic polymer is an oriented polyethylene terephthalate (OPET), and the first layer is provided already carrying the second layer being a thin barrier deposition layer, here a vacuum deposited aluminium layer. The first layer carrying the second layer has an oxygen barrier (OTR) which is normally 0.5-1.0 cm³ /[m² day atm] at 23° C, 50% relative humidity on a flat film.

The primer comprises polyethyleneimine ("PEI") as said first component and poly(vinyl alcohol) ["PVOH"] as said second component.

The concentration of "PEI" is from about 2 to about 5 % (weight) and the concentration of "PVOH" is from about 5 to about 12 % (weight).

The material is prepared by means of applying a primer. Firstly, said first layer carrying the vacuum deposited aluminium layer is introduced into the conventional converting machine, and thereafter the primer is applied to said vacuum deposited aluminium layer. The primer is dried and heat sensitivized in a heat nip or oven.

### Example 2

### Preparation of a material for packaging purposes, comprising a first layer of OPP and a second layer being a vacuum deposited aluminium layer, which is carried by the layer of OPP, and said second layer has a primer applied onto the side which is distant to said first layer

The first layer of a thermoplastic polymer is an oriented polypropylene (OPP), and the first layer is provided already carrying the second layer being a thin barrier deposition layer, here a vacuum deposited aluminium layer. The first layer carrying the second layer has an oxygen barrier (OTR) which is normally 10-300 cm³ /[m² day atm] at 23° C, 50% relative humidity on a flat film.

The primer comprises polyethyleneimine ("PEI") as said first component and poly(vinyl alcohol) ["PVOH"] as said second component.

The concentration of "PEI" is from about 2 to about 5 % (weight) and the concentration of "PVOH" is from about 5 to about 12 % (weight).

The material is prepared by means of applying a primer. Firstly, said first layer carrying the vacuum deposited aluminium layer is introduced into the conventional converting machine, and thereafter the primer is applied to said vacuum deposited aluminium layer. The primer is dried and heat sensitivized in a heat nip or oven.

### Example 3a

To each of the products from Examples 1 and 2, after the primer has been heat sensitivized, a print and/or lacquer is applied onto the primer.

### Example 3b

To each of the products from Examples 1 and 2, after the primer has been heat sensitivized, a layer, which comprises of a layer of an adhesive and a layer of PE, is applied onto the primer in a triplex lacquer laminator

### Example 3b.i

To each of the products from Examples 1 and 2, after the primer has been heat sensitivized, a layer of PE is applied onto the primer in an extrusion lamination process.

### Example 3b.ii

To each of the products from Examples 1 and 2, after the primer has been heat sensitivized, a layer, which comprises of a layer of PE and a layer of paper, is applied onto the primer in an extrusion lamination process.

### Example 4

To each of the products from Examples 1 and 2, after the primer has been heat sensitivized, a first layer of PE is applied onto the primer, wherein the first layer of PE, simultaneously, is laminated to a layer of OPET. Then, a further layer of PE is applied onto the first layer of the products from Examples 1 and 2, respectively.

### Example 5

### Preparation of a material for packaging purposes, comprising a first layer of OPET and a second layer being a vacuum deposited aluminium layer, which is carried by the layer of OPET, and said second layer has an adhesive layer and a primer applied onto the side which is distant to said first layer

The first layer of a thermoplastic polymer is an oriented polyethylene terephthalate (OPET), and the first layer is provided already carrying the second layer being a thin barrier deposition layer, here a vacuum deposited aluminium layer. The first layer carrying the second layer has an oxygen barrier (OTR) which is normally 0.5-1.0 cm³ /[m² day atm] at 23° C, 50% relative humidity on a flat film. The adhesive layer is of any suitable conventional adhesive, e. g. of the polyester, the polyurethane or the polyether type, or combinations thereof.
The primer comprises polyethyleneimine ("PEI") as said first component and poly(vinyl alcohol) ["PVOH"] as said second component.

The material is prepared by means of lacquer lamination. Firstly, said first layer carrying the vacuum deposited aluminium layer is introduced into the conventional converting machine, and thereafter the adhesive layer is applied to said vacuum deposited aluminium layer. Further, the primer is applied onto said adhesive layer. The primer is dried and heat sensitivized in an oven or heat nip.

The product of Example 5 has proven to be suitable in materials corresponding to the material in Examples 3b wherein the product of Example 1 has been changed to the product of Example 5

### Example 6

### Preparation of a material for packaging purposes, comprising a plain layer of OPP applied with a print, a primer applied onto the print, and a further layer of OPP carrying a vacuum deposited aluminium layer applied onto the primer by means of an adhesive layer wherein the adhesive layer is applied on the vacuum deposited aluminium layer of said further layer of OPP

The plain layer of OPP is provided from a manufacturer.

The print is a conventional print.

The primer comprises polyethyleneimine ("PEI") as said first component and poly(vinyl alcohol) ["PVOH"] as said second component.

The adhesive layer is of any suitable conventional adhesive, e.g. of the polyester, the polyurethane or the polyether type, or combinations thereof.

The further layer of OPP (i.e. said first layer according to the invention) is provided from a manufacturer already carrying the vacuum deposited aluminium layer (i.e. said second layer according to the invention). Said further layer of OPP carrying the vacuum deposited aluminium layer has an oxygen barrier (OTR) which is normally 10-300 cm³ /[m² day atm] at 23° C, 50% relative humidity on a flat film.

The material is prepared by the following steps:

In a printing press is a print applied to the plain layer of OPP, and then the primer is applied onto the print.

In a lacquer laminator (i.e. a conventional converting machine) is the adhesive layer applied onto the vacuum deposited aluminium layer of said further layer of OPP. Then, also in the lacquer laminator, is said further layer of OPP pressed together with the plain printed layer of OPP and, thus, the adhesive layer is brougth in contact with the applied primer.

The primer in the material is dried and heat sensitivized in an oven

### Example 7

### O₂- permeability measured by means of gelbo cycles

The diagram below shows a graphic presentation of a comparison of the flexcrack resistance of three materials: a material according to the present invention (denoted OPETmet/b/PE; 12/80), a conventional material comprising a thin barrier deposition layer (denoted OPETmet/PE; 12/75), and a material comprising an aluminium foil (denoted OPET/Alu/PE; 12/7/75). The resistance towards flex is presented as the O₂ -permeability of the material vs. number of gelbo cycles. The bending resistance, i.e. the resistance towards flex, is evaluated by measuring the gas barrier property, here the O₂ - permeability, after the gelbo treatment

The gelbo treatment is a standardised method (ASTM F392), wherein a cylinder is formed of the material which is to be tested. Said cylinder is fixed around two holders at a distance from each other. The flexing is performed in that way that the holders are turned 440° while the cylinder is moving 9 mm ahead. Then creased further in 65 mm of straight movement of 45 cycles/min. The gelbo flexcrack method (i.e. the gelbo treatment) is used to simulate handeling and packaging of material 0-50 cycles cover practical usage of a laminate.

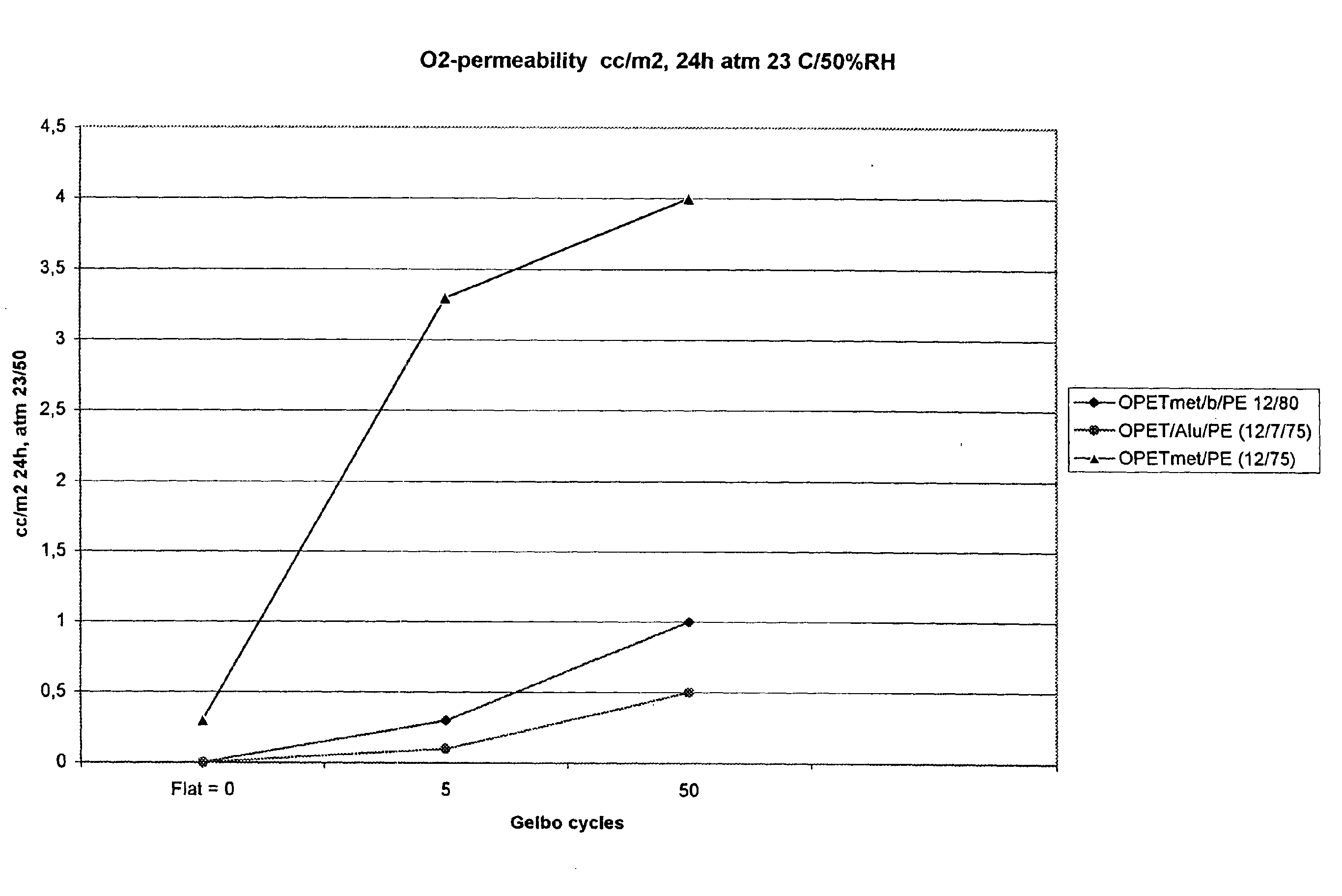

## Claims

1. Material for packaging purposes, comprising a first layer of a thermoplastic polymer and a second layer, wherein said second layer is a thin barrier deposition layer and said first layer carries said second layer, **characterized in that** said second layer has a primer applied onto the side which is distant to said first layer, and that said primer comprises a first component which gives an adequate bonding to a deposition layer, polar polymers and oxidized unpolar polymers.

2. A material according to claim 1, wherein said primer is crosslinked.

3. A material according to claim 1 or 2, wherein an adhesive or a coextruded polymer layer is applied on one or both sides of said primer.

4. A material according to anyone of the preceding claims, wherein said first component is an organic polyimine, an organofunctional silane, an organofunctional titanate, an epoxy polymer and polyurethane or mixtures thereof, and said polyimine, said silane, said titanate, said epoxy polymer and/or said polyurethane may, optionally, be chemically modified

5. A material according to anyone of the preceding claims, wherein said first component is a compound as defined in formula (1): 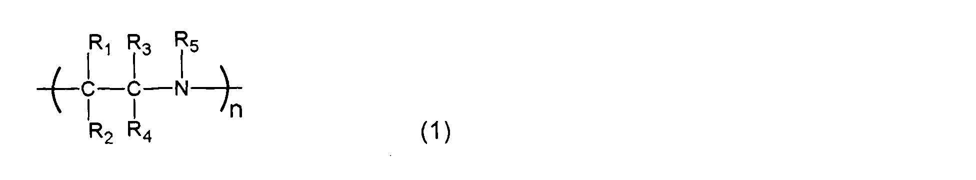
wherein R₁ through R₄ are each, independently from each other, hydrogen or an alkyl having from 1 to 6 carbon atoms,
R₅ is hydrogen, an (C₁₋₆)alkyl which alkyl may, optionally, be hydroxysubstituted, a (C₁₋₆)alkyl (C₁₋₆)alkoxy group, or a fatty acid residue from the reaction of a fatty acid with the imine,
and n is an integer, and
quaternary ammonium compounds or salts, thereof

6. A material according to anyone of the preceding claims, wherein said first component is polyethyleneimine ("PEI").

7. A material according to anyone of the preceding claims, wherein said first component has the ability to be heat sensitivized.

8. A material according to anyone of the preceding claims, wherein said primer comprises a second component which gives a gas and aroma barrier.

9. A material according to claim 8, wherein said second component is poly(vinyl alcohol) ["PVOH"], a copolymer of ethylene and vinyl alcohol ["EVOH"], polyvinylidene chloride ["PVDC"], or an acrylonitrile.

10. A material according to claim 8, wherein said second component is poly(vinyl alcohol) ["PVOH"].

11. A material according to anyone of the preceding claims, wherein said primer comprises polyethyleneimine ("PEI") as said first component and poly(vinyl alcohol) ["PVOH"] as said second component.

12. A material according to anyone of the preceding claims, wherein said first layer comprises oriented polyethylene terephthalate (OPET), oriented polypropylene (OPP), oriented polyamide (OPA), cast polyamide (CPA) or cast polypropylene (CPP).

13. A material according to anyone of the preceding claims, wherein said thin barrier deposition layer is a vacuum deposition layer, e.g., a vacuum deposited aluminium, SiOₓ or AlOₓ layer, or a hydrocarbon based plasma deposition layer.

14. A material according to anyone of the preceding claims, wherein the material comprises further component/s, for example, print /s, lacquer/s, adhesives layer/s, layer/s of polymers (e.g. PE, OPET, OPA or OPP), layer/s of polar polymers, and/or layer/s of oxidized unpolar polymers.

15. A material according to anyone of the preceding claims, wherein said second layer has said primer applied directly onto the side which is distant to said first layer.

16. A material according to anyone of the preceding claims, wherein said second layer has said adhesive or coextruded polymer layer applied directly onto the side which is distant to said first layer, and said primer applied thereon.

17. Method for preparing a material according to anyone of the preceding claims, which method for preparing comprises application of a primer onto a thin barrier deposition layer, an adhesive layer or a coextruded polymer layer, wherein the primer comprises a first component which gives an adequate bonding to a deposition layer, an adhesive layer, a coextruded polymer layer, polar polymers, oxidized unpolar polymers and to any said further component/s.

18. Method for preparing a material according to claim 17, wherein said method for preparing comprises a step of a heat sensitivizing and said first component, which has the ability to be heat sensitivized, is thereby heat sensitivized.

19. Method for packaging, which method for packaging comprises a material according to anyone of claims 1 to 16 or a method for preparing according to claims 17 or 18.

20. Package , which package comprises a material according to anyone of claims 1 to 16.
